# EUROPEAN PATENT APPLICATION

(11) **EP 2 412 506 A1**
(43) Date of publication of application: **01.02.2012**
(21) Application number: 11175208.5
(22) Date of filing: 25.07.2011
(51) Int. Cl.: B29C 44/18, B29C 44/34, C08J 9/236, B29C 44/44

(54) **Method of insulation**

(30) Priority: 26.07.2010 EP 10170764
(71) Applicant: Ineos Styrenics International SA, 1700 Fribourg (CH)
(72) Inventor: The designation of the inventor has not yet been filed
(74) Representative: Smith, Julian Philip Howard

(57) **Abstract**

A process is disclosed for injecting a mixture of polymeric beads, a liquid binder and optionally other additives into a cavity to be filled therewith, wherein the injection apparatus includes means for atomizing the liquid binder and optionally any other liquid additives before they exit the injection apparatus. This is said to result in better bonding of the beads.

## Description

This invention relates to a method of insulation, and more particularly to a process for injecting loose beads of expanded polystyrene together with a bonding agent into a cavity.

Polystyrene is well known in the insulation of buildings. In one application, expanded polystyrene beads are employed as loose-fill cavity wall insulation. The technique comprises injecting into the cavity between the inner and outer walls of a cavity wall construction a mix of expanded polystyrene beads having a bulk density of around 10-20 kg/m³, together with a binder. The polystyrene grade used in this application is typically a standard white grade having a thermal conductivity of about 0.040 W/m.K and a bulk density of 15 kg/m³. The binder ensures that the expanded beads hold together in place, thus providing the necessary structural integrity by avoiding easy disintegration of expanded beads at low levels of strain. The binder also helps to reduce the spillage of beads in case of structural (wall) damage. Binders used are normally aqueous dispersions of organic polymers of acrylics, vinyl acetates, polyurethanes and so forth.

The mix of beads and binder is typically injected into the cavity to be filled by an injector, which pumps into the cavity a stream of beads, to which is added immediately before exiting the injector a stream of the binder.

A disadvantage of such bonded foams has previously been that they do not pass the DIN 4102 B1 test normally required for the fused EPS boards. However in our copending application EP 2256154A we disclose a formulation for injection as loose-fill insulation which has improved fire retardancy properties. The formulation comprises (i) expanded polystyrene particles or preferably beads, (ii) an inorganic binder, preferably water glass and (iii) an athermanous material, preferably expandable graphite.

The preferred inorganic binder disclosed in EP 2256154A is based on silicate and water, where silicate is understood to be any of numerous compounds containing silicon, oxygen, and one or more metals. Generally, silicates consist of SiO₂ or SiO₄ groupings combined with one or more metals and sometimes hydrogen, with the addition of ions such as aluminium, magnesium, calcium, sodium, or other metals. According to the combination ratio Na₂O/SiO₂, they can be divided into various products. For example, liquid sodium silicate, called water glass, is a viscous alkaline and transparent solution in which the SiO₂ to Na₂O ratio varies. Also well known are the zeolites, hydrated aluminium silicates of calcium sodium or potassium. When based on calcium as additional salt source, binders can even be cement, lime or gypsum. Particularly preferred are alkali metal silicates for example sodium or potassium silicate preferably sodium silicate.

We have found that one potential problem with the use of water glass or related silicate-based materials as the binder is that of ensuring that all of the beads are thoroughly wetted by the binder and will therefore bond well. With organic binders, wetting of the beads is not generally a problem: however water glass and related silicate-based materials are not organic, and therefore do not readily coat polystyrene beads. As a result there may be incomplete or inhomogeneous distribution of the binder throughout the mass of beads, leading to poor or incomplete bonding of the beads after application, as well as a poorer distribution of the fire-resistant binder between the beads.

EP 23352A discloses a device for spraying a mixture of polymeric beads and a binder: however the objective is to is to spray onto a surface rather than into a cavity, and the nature of the binder and its relative proportion to the beads are intended to provide a solid coating on the surface which contains dispersed beads. One example of the binder is concrete. Thus this is not relevant to the problem of trying to ensure a sufficient coating on the beads, since the final coating is solid.

We have discovered that this problem can be minimised by a particular construction of the apparatus used to inject the mixture of beads and binder, which enables more effective mixing of the beads and binder.

Accordingly in a first aspect the present invention provides a process for injecting a mixture of polymeric beads, a liquid binder and optionally other additives into an area to be filled therewith, wherein the injection apparatus includes means for atomizing the liquid binder and optionally any other liquid additives before they exit the injection apparatus.

The area to be filled with the mixture of polymeric beads is preferably a cavity. Generally, it is a cavity between two structural elements. By "structural element" is meant a wall, board or sheet, or any structure which is capable of retaining loose beads.

The ratio of beads to binder and the viscosity of the binder is preferably such that after injection into the area to be filled therewith, the beads are fully coated with the binder. However the gaps between the beads are at least partially free of binder. Thus after injection, the area filled with the mixture contains a matrix of beads coated with the binder and optionally other additives, and with air gaps between at least some of the beads. Typically the weight ratio of beads to binder is 5-75wt%, more preferably 15-50wt% and most preferably 20-35wt%. thus the most preferable ratio means that for every kg of beads injected, 0.2-0.35kg of binder is injected. The value depends both on the density of the beads and the density of the binder.

The binder preferably has a density 0.8-3 kg/litre, more preferably 1-1.8 kg/litre.

By "atomizing" is meant the process whereby a bulk liquid is transformed into a multiplicity liquid micro-droplets ranging from 10-100µm with an average particle size smaller than 50µm, through the formation of disturbances on the surface of the bulk liquid, followed by their amplification due to energy and momentum transfer from the surrounding gas.

We have found that by ensuring that the binder is atomized before exiting the apparatus, the above-mentioned disadvantages, which arise when separate streams of beads and binder are simply mixed immediately before the point of injection, can be significantly reduced.

The expanded beads are fed into the injection apparatus together with the binder and any other additives such as a fire-resistance enhancer. Inside, the binder (optionally together with other liquid additives) is atomized and mixed with the beads before exiting the apparatus. It is also possible to mix the binder and any other additive(s) prior to being fed into the injection apparatus. Such prior mixing can be carried out at a temperature in the range 0 - 100°C preferably 0 - 75°C, and most preferably at ambient temperature. Alternatively, the other additives may not be atomized with the binder in the injection apparatus or mixed therewith beforehand, but instead a stream thereof may be merged with the stream of beads/binder during injection into the area to be filled. However this is not preferred.

The atomization of the binder and optionally any other liquid additives is preferably carried out by atomizing means located inside the injection apparatus. The atomizing means is preferably in the form of an air atomizing nozzle which mixes the binder with air. Liquid is ejected through the nozzle and may be mixed with air either inside the nozzle (internal mixing) or outside, in which air is injected into the stream of liquid as it exits the nozzle (external mixing). Internal mixing generally provides a greater degree of atomization, but external mixing is preferred for the present invention because it is more suitable for higher viscosity liquids, and also ensures that the air outlet does not become contaminated with the liquid binder. When the binder and air are externally mixed, it is preferred that the direction of flow of the intersecting streams differs by less than 20 degrees, and preferably by less than 10 degrees. This ensures good mixing of the two streams, which is more difficult to achieve if the angle between the intersecting streams is large.

The liquid droplet size can be adapted by adjusting the atomising air pressure and the number of holes in the cap. The air pressure is typically between 0.5 and 6 bar, and the average liquid droplet diameter is preferably between 10 and 90µm. The liquid outlet of the atomizing nozzle typically has a diameter between 0.25 and 3mm. The degree of wetting of the beads can be controlled by adjusting the spraying pattern, angle and/or flow-rate of the binder.

The beads preferably have an average diameter of between 1 and 6 mm.

The polymeric beads preferably comprise expanded polystyrene.

In one embodiment, the binder is inorganic, although the invention is also applicable to injection using organic binders. A preferred binder is based on silicate and water: particularly preferred are alkali metal silicates for example sodium or potassium silicate preferably sodium silicate, and the binder is most preferably water glass.

The inorganic binder can also be in the form of a gel or a sol-gel particularly when the binder is a silicate or zeolite. A gel is a colloidal suspension in which a porous skeleton encloses a liquid phase. The binder may be applied as a gel-forming composition comprising a silicate or aluminosilicate which may optionally also comprise an organic liquid in particular an organic liquid that is water-immiscible. The gel-forming composition can be *formed in situ* by adding a metal silicate with a metal aluminate preferably in water. The amount of silicate in a binder comprising silicate and a carrier for example water will be in the range of 10-70, preferably 25-60 for example 30-45 per cent by weight based on the total weight of the silicate plus carrier.

The ratio of the weight of inorganic binder to weight of polystyrene in the mixture injected according to the process of the present invention is in the range 5:95 to 50:50, preferably 10:90 to 40:60 for example 25:75. Where the term "binder" is used in this application, it is understood to mean the inorganic material (for example silicate) together with its carrier, usually water. Weights and relative weights of binder are to be construed in the same manner.

The expanded polystyrene beads are formed typically by heat treatment of expandable polystyrene (e.g. as described in "Modern Styrenics Polymers, Scheirs & Priddy, eds. Wiley, New York 2003). Expandable polystyrene is understood to be a composition which comprises a blowing agent and which is capable of expansion by virtue of the presence of the blowing agent. The composition may be in the form of particles or, preferably, of expandable beads. By beads are meant, generally, spherical or substantially spherical particles, in particular spheroidal particles which may have a large diameter and a small diameter, with a ratio between the large diameter and the small diameter ranging in particular from 1.0 to 1.3, preferably from 1.0 to 1.2. The expandable particles or beads may have an average size ranging from 0.3 to 3 mm, preferably from 0.3 to 2 mm, in particular from 0.4 to 1.5 mm. They may also have a bulk density (or apparent density), measured according to method ASTM D 1622, ranging from 550 to 720 kg/m³, preferably from 580 to 710 kg/m³, in particular from 600 to 770 kg/m³.

The polystyrene composition from which the beads utilised in the invention are formed contains a styrene polymer, which may be a homopolymer or a copolymer of styrene, containing at least 50%, preferably at least 80% and in particular at least 90% by weight of styrene, as well as 0- 10%wt of an athermanous material such as carbon black. The comonomer or comonomers present in the styrene copolymer may be selected from vinylaromatic compounds, in particular from alpha-methylstyrene, a styrene halogenated on the aromatic ring or a styrene alkylated on the aromatic ring, (meth)acrylic acid, C₁ to C₄ alkyl esters of (meth)acrylic acid such a methyl acrylate, methyl methacrylate, ethyl acrylate, ethyl methacrylate, isopropyl acrylate or butyl acrylate, amides and nitriles of (meth)acrylic acid such as acrylamide, methacrylamide, acrylonitrile or methacrylonitrile, butadiene, ethylene, divinylbenzene and maleic anhydride. The expandable polystyrene composition can also be a blend of polystyrene and polyolefins polymers (e.g. ARCEL commercially available from NOVA Chemicals). Preference is given to using a homopolystyrene. The weight-average molecular mass, Mw, of the styrene polymer may be in a range extending from 150 000 to 450 000 daltons, preferably from 160 000 to 400 000 daltons, in particular from 170 000 to 300 000 daltons. The distribution of the molecular masses of the styrene polymer, calculated by the ratio between Mw and the number-average molecular mass Mn of the polymer, may range from 1.5 to 4.0, preferably from 1.7 to 3.5, in particular from 1.8 to 3.0. The polystyrene may advantageously have a relatively low level of residual monomer and, where appropriate, of residual comonomer(s), despite the presence of the carbon black, which is known to be a polymerization inhibitor: for example, the amount may be less than or equal to 2000 parts by weight per million (ppm), preferably equal to or less than 1000 ppm.

The expandable polystyrene can be made via either a suspension or extrusion process.

The amount of polystyrene in the expanded beads comprises 1 to 99, preferably 10 to 80 more preferably 50 to 75 by weight of the beads. The beads may additionally contain an athermanous material such as graphite or carbon black. An athermanous material is a material which does not transmit or exhibits limited transmission of heat. Typical athermanous materials include metal oxides e.g. Fe₂O₃, A1₂O₃, non-metallic oxides e.g. SiO2, metal powder, organic dyes, IR radiation absorbers and carbon, in particular in the form of carbon black or graphite.

The expanded beads typically have a bulk density (or apparent density) ranging from 5 to 200 kg/m³, more usually from 5 to 100 kg/m³, in particular from 5 to 50 kg/m³, and especially from 5 to 20 kg/m³.

The invention will now be illustrated with reference to the following examples:

### EXAMPLES

Polystyrene beads having an average diameter of 1 to 6 mm were sprayed into a test cavity together with a liquid comprising water glass as binder, with no additives. In Example 1 the binder and beads were sprayed using a conventional injection gun. In Example 2 they were sprayed in atomized form according to the invention, using an injection gun containing an atomizing nozzle.

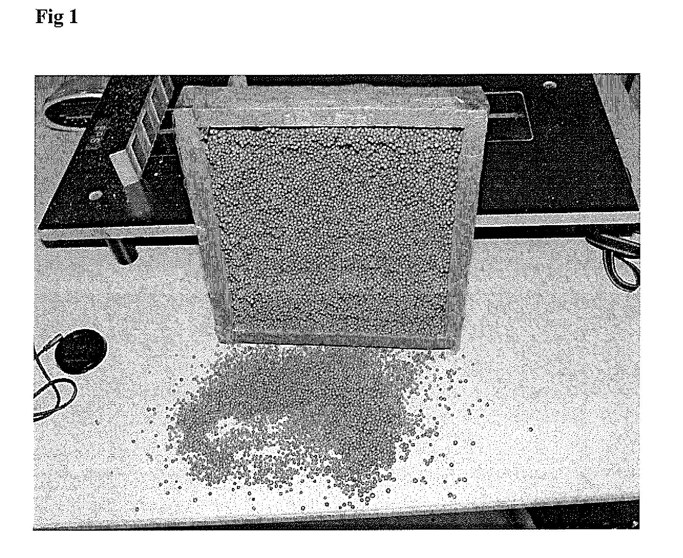

Figure 1 shows the test cavity of Example 1, following removal of the front panel. It can be seen that the quality of the binding is relatively poor, with many of the beads not being bound at all so that they fall out when the front panel is removed.

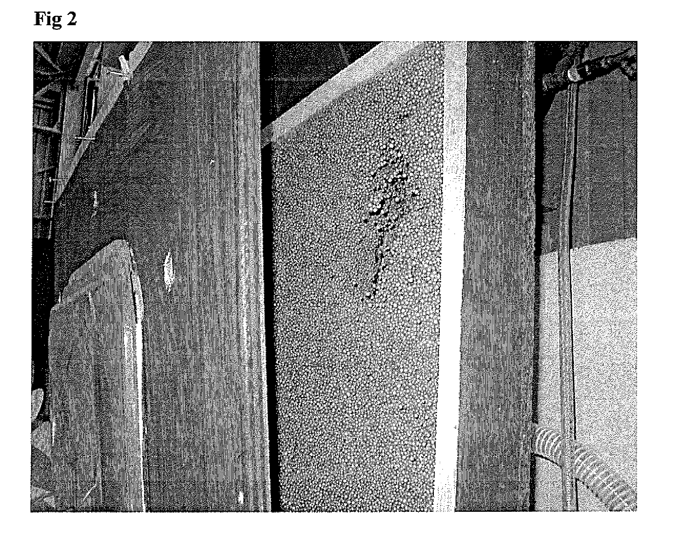

Figure 2 shows the test cavity of Example 2 as the front panel is being removed. Apart from in a small area, good binding has occurred throughout, with the beads bound together sufficiently well to form a smooth and uniform surface.

## Claims

1. Process for injecting a mixture of polymeric beads, a liquid binder and optionally other additives into a cavity to be filled therewith, wherein the injection apparatus includes means for atomizing the liquid binder and optionally any other liquid additives before they exit the injection apparatus.

2. Process according to claim 1, wherein the means for atomizing the liquid binder comprises an atomizing nozzle.

3. Process according to claim 2, wherein liquid and optionally other additives is ejected through the atomizing nozzle in the form of a stream, and air is injected into the stream as it exits the nozzle.

4. Process according to claim 3, wherein the direction of flow of the intersecting streams of air and liquid differs by less than 20 degrees.

5. Process according to any one of claims 2 to 4, wherein the the air pressure in the atomizing nozzle is between 0.5 and 6 bar.

6. Process according to any one of claims 2 to 5, wherein, and the liquid outlet of the atomizing nozzle has a diameter of between 0.25 and 3mm.

7. Process according to any preceding claim, wherein the average droplet diameter of the atomized liquid binder is between 10 and 90µm.

8. Process according to any preceding claim, wherein the binder is inorganic.

9. Process according to claim 8, wherein the binder is an alkali metal silicate, preferably in the form of a gel or sol-gel.

10. Process according to claim 9, wherein the binder is water glass.

11. Process according to any preceding claim, wherein the polymeric beads comprise expanded polystyrene beads.

12. Process according to claim 11, wherein the expanded polystyrene beads contain an athermanous material.
